# EUROPEAN PATENT APPLICATION

(11) **EP 3 960 809 A1**
(43) Date of publication of application: **02.03.2022**
(21) Application number: 20795402.5
(22) Date of filing: 17.04.2020
(51) Int. Cl.: C08K 7/02, C08L 77/06, C08J 5/04, F01D 5/04

(54) **POLYAMIDE RESIN COMPOSITION AND MOLDED ARTICLE OBTAINED BY MOLDING SAME**

(30) Priority: 26.04.2019 JP 2019084798
(71) Applicant: Unitika Ltd., Amagasaki-shi, Hyogo 660-0824 (JP)
(72) Inventor: ASAI Miho, Uji-shi, Kyoto 611-0021 (JP); MII Junichi, Uji-shi, Kyoto 611-0021 (JP)
(74) Representative: Vigand, Philippe
(86) International application number: PCT/JP2020/016926
(87) International publication number: WO 2020/218209

(57) **Abstract**

A polyamide resin composition including a semi-aromatic polyamide (A) having a melting point of 290 to 330°C and a fibrous reinforcing material (B), wherein the polyamide resin composition has an amount of creep strain of 2.0% or less in the flow direction after a lapse of 100 hours under the measurement conditions of a temperature of 100°C and a tensile load of 75 MPa.

## Description

### Technical Field

The present invention relates to a polyamide resin composition containing a semi-aromatic polyamide and a fibrous reinforcing material, and a molded article obtained by molding the same.

### Background Art

In recent years, for weight reduction, thermoplastic resins instead of metals have been applied to materials constituting rotating bodies such as impellers and fans. In addition, in recent years, rotating bodies have been rotated at high speed, and, for example, a rotating body having a maximum outer diameter of about 25 mm has been rotated at a high speed of 100000 rpm. Such rotating bodies rotating at high speed need heat resistance, strength in the centrifugal direction, dimensional accuracy, and low specific gravity and are required to have higher strength in the centrifugal direction and a smaller amount of tensile creep strain corresponding to dimensional accuracy than conventional materials, particularly in high temperature environments around 100°C.

As thermoplastic resins used for the materials of impellers capable of high speed rotation, alloys of nylon 66 and polyethersulfone are disclosed in Patent Literature 1, alloys of polyetherketone and polyetherimide are disclosed in Patent Literature 2, polyetheretherketone, polyetherketone, and alloys of polyetherketone and polyetherimide are disclosed in Patent Literature 3, and polyimides, polyamide-imides, bismaleimide triazine, and polyethersulfone are disclosed in Patent Literature 4.

However, unfortunately, these thermoplastic resins are generally expensive, need a high temperature mold during molding, and further have poor fluidity during molding and therefore the designability of the shape of rotating bodies such as impellers is low. In addition, unfortunately, these thermoplastic resins generally have high specific gravity, and therefore not only does the weight of the obtained rotating bodies increase, but larger centrifugal force is applied when the rotating bodies rotate at high speed, and therefore the number of revolutions cannot be increased to a certain value or more.

### Citation List

### Patent Literature

Patent Literature 1: Japanese Utility Model Publication No. 63-063597
Patent Literature 2: Japanese Patent Laid-Open No. 02-269766
Patent Literature 3: Japanese Patent Laid-Open No. 06-042302
Patent Literature 4: Japanese Utility Model Publication No. 01-111102

### Summary of Invention

### Technical Problem

It is an object of the present invention to provide a resin composition having lower cost and lower specific gravity than conventional resin compositions, excellent in fluidity, capable of being molded into a molded article excellent in appearance at a low mold temperature of 120°C or less, and having excellent dimensional accuracy in high temperature environments.

### Solution to Problem

The present inventors have diligently repeated studies in order to solve the problems, and as a result found that a resin composition containing a particular resin and a particular reinforcing material and having a particular amount of creep strain can solve the problems, and arrived at the present invention.

The polyamide resin composition of the present invention includes a semi-aromatic polyamide (A) having a melting point of 290 to 330°C and a fibrous reinforcing material (B), and has an amount of creep strain of 2.0% or less after a lapse of 100 hours under the measurement conditions of a temperature of 100°C and a tensile load of 75 MPa.

According to the polyamide resin composition of the present invention, it is preferred that the semi-aromatic polyamide (A) contains a dicarboxylic acid component and a diamine component as constituents, the dicarboxylic acid component includes terephthalic acid as the main component, and the diamine component includes 1,10-decanediamine as the main component.

According to the polyamide resin composition of the present invention, the fibrous reinforcing material (B) is preferably a carbon fiber having a tensile strength of 4000 to 4800 MPa.

The molded article of the present invention is obtained by molding the polyamide resin composition.

The molded article of the present invention is preferably a rotating body.

According to the molded article of the present invention, the rotating body is preferably an impeller.

According to the molded article of the present invention, the rotating body is preferably a fan.

### Advantageous Effects of Invention

According to the present invention, it is possible to provide a resin composition having high heat resistance and low specific gravity, excellent in fluidity, and having a small amount of creep strain in high temperature environments around 100°C, and a molded article excellent in appearance consisting of the same, and the molded article of the present invention can be preferably used for rotating bodies such as impellers and fans.

### Brief Description of Drawings

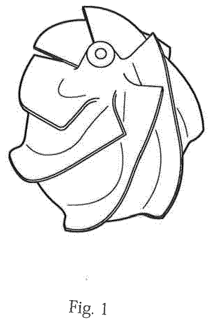

[FIG. 1] FIG. 1 is a perspective view of an impeller being one example of a molded article according to the present invention.

### Description of Embodiments

The polyamide resin composition of the present invention contains a semi-aromatic polyamide (A) and a fibrous reinforcing material (B).

In the present invention, the semi-aromatic polyamide (A) contains a dicarboxylic acid component and a diamine component as constituents, and the dicarboxylic acid component contains an aromatic dicarboxylic acid, and the diamine component contains an aliphatic diamine.

The dicarboxylic acid component constituting the semi-aromatic polyamide (A) preferably includes terephthalic acid (T) as the main component, and the content of terephthalic acid is preferably 75 mol % or more, more preferably 85 mol % or more, and further preferably 100 mol % in the dicarboxylic acid component from the viewpoint of heat resistance and creep characteristics.

The diamine component in the semi-aromatic polyamide (A) is preferably an aliphatic diamine having 8 to 12 carbon atoms, from the viewpoint of heat resistance and processability. Examples of the aliphatic diamine having 8 to 12 carbon atoms include 1,8-octanediamine, 1,9-nonanediamine, 1,10-decanediamine, 1,11-undecanediamine, and 1,12-dodecanediamine. These may be used singly or in combination. Especially, the diamine component preferably includes 1,10-decanediamine as the main component because of high versatility, and from the viewpoint of heat resistance and creep characteristics, the content of 1,10-decanediamine is preferably 75 mol % or more, more preferably 85 mol % or more, and further preferably 100 mol % in the diamine component.

In the present invention, specific examples of the semi-aromatic polyamide (A) include polyamide 8T, polyamide 9T, polyamide 10T, polyamide 11T, and polyamide 12T.

The dicarboxylic acid component of the semi-aromatic polyamide (A) may contain a dicarboxylic acid other than terephthalic acid. Examples of the dicarboxylic acid other than terephthalic acid include aromatic dicarboxylic acids such as phthalic acid, isophthalic acid, and naphthalenedicarboxylic acid, aliphatic dicarboxylic acids such as oxalic acid, malonic acid, succinic acid, glutaric acid, adipic acid, pimelic acid, suberic acid, azelaic acid, sebacic acid, undecanedioic acid, and dodecanedioic acid, and alicyclic dicarboxylic acids such as cyclohexanedicarboxylic acid. The content of the dicarboxylic acid other than terephthalic acid is preferably less than 25 mol %, more preferably less than 15 mol %, in the dicarboxylic acid component, and the dicarboxylic acid component further preferably does not substantially include dicarboxylic acid other than terephthalic acid.

The diamine component of the semi-aromatic polyamide (A) may contain another diamine other than an aliphatic diamine having 8 to 12 carbon atoms. Examples of another diamine include aliphatic diamines such as 1,2-ethanediamine, 1,3-propanediamine, 1,4-butanediamine, 1,5-pentanediamine, 1,6-hexanediamine, 1,7-heptanediamine, 1,13-tridecanediamine, 1,14-tetradecanediamine, and 1,15-pentadecanediamine, alicyclic diamines such as cyclohexanediamine, and aromatic diamines such as xylylenediamine and benzenediamine. The content of another diamine other than an aliphatic diamine having 8 to 12 carbon atoms is preferably less than 25 mol %, more preferably less than 15 mol %, in the diamine component, and the diamine component further preferably does not substantially include another diamine other than an aliphatic diamine having 8 to 12 carbon atoms.

The semi-aromatic polyamide (A) may contain lactams such as caprolactam and laurolactam, and ω-aminocarboxylic acids such as aminocaproic acid and 11-aminoundecanoic acid, as needed. The content of these is preferably less than 10 mol % based on the total number of moles of the raw material monomers, and the semi-aromatic polyamide (A) more preferably does not substantially include these.

The semi-aromatic polyamide (A) preferably contains a monocarboxylic acid component as a constituent. When the semi-aromatic polyamide contains a monocarboxylic acid, the amount of terminal free amino groups can be kept low, and the decomposition and discoloration of the polyamide due to thermal deterioration and oxidative deterioration when the polyamide is subjected to heat are suppressed, and the terminals are hydrophobic, and therefore the polyamide can have low water absorbency. As a result, the heat resistance and low water absorbency of the obtained resin composition can be improved.

The content of the monocarboxylic acid component is preferably 0.3 to 4.0 mol %, more preferably 0.3 to 3.0 mol %, further preferably 0.3 to 2.5 mol %, and particularly preferably 0.8 to 2.5 mol % based on all the monomer components constituting the semi-aromatic polyamide (A) . When the content of the monocarboxylic acid component is 0.3 to 4.0 mol %, the molecular weight distribution during polymerization can be decreased, the releasability during molding processing can be improved, and the amount of gas generated can be suppressed during molding processing. On the other hand, when the content of the monocarboxylic acid component is more than 4.0 mol %, the mechanical characteristics may decrease. In the present invention, the content of the monocarboxylic acid refers to the proportion of the residue of the monocarboxylic acid, that is, the moiety obtained by the elimination of the terminal hydroxyl group from the monocarboxylic acid, in the semi-aromatic polyamide (A).

Examples of the monocarboxylic acid component include aliphatic monocarboxylic acids, alicyclic monocarboxylic acids, and aromatic monocarboxylic acids. Especially, aliphatic monocarboxylic acids are preferred because the amount of generated gases of semi-aromatic polyamide-derived components can be decreased, the fluidity of the resin composition can be improved, mold soil can be reduced, and the releasability can be improved.

For the monocarboxylic acid component, monocarboxylic acids having a molecular weight of 140 or more are preferred, and monocarboxylic acids having a molecular weight of 170 or more are more preferred. By using a monocarboxylic acid having a molecular weight of 140 or more, the releasability improves, the amount of gas generated can be suppressed at the temperature during molding processing, and the molding fluidity can also be improved.

Examples of aliphatic monocarboxylic acids having a molecular weight of 140 or more include caprylic acid, nonanoic acid, decanoic acid, lauric acid, myristic acid, palmitic acid, stearic acid, and behenic acid. Examples of alicyclic monocarboxylic acids having a molecular weight of 140 or more include 4-ethylcyclohexanecarboxylic acid, 4-hexylcyclohexanecarboxylic acid, and 4-laurylcyclohexanecarboxylic acid. Examples of aromatic monocarboxylic acids having a molecular weight of 140 or more include 4-ethylbenzoic acid, 4-hexylbenzoic acid, 4-laurylbenzoic acid, 1-naphthoic acid, 2-naphthoic acid, and derivatives thereof. The monocarboxylic acid components may be used singly or in combination. A monocarboxylic acid having a molecular weight of 140 or more and a monocarboxylic acid having a molecular weight of less than 140 may be used in combination. In the present invention, the molecular weight of the monocarboxylic acid refers to the molecular weight of the raw material monocarboxylic acid.

In the present invention, the semi-aromatic polyamide (A) needs to have a melting point of 290 to 330°C. The polyamide resin composition of the present invention can have a decreased amount of creep strain by containing the semi-aromatic polyamide (A) having a melting point of 290 to 330°C and the fibrous reinforcing material (B). When the melting point of the semi-aromatic polyamide (A) is less than 290°C, the polyamide resin composition has low heat resistance and an increased amount of creep strain. On the other hand, the semi-aromatic polyamide (A) having a melting point of more than 330°C is not preferred because the melting processing temperature is close to the decomposition temperature, and the semi-aromatic polyamide (A) decomposes during melting processing and is difficult to process.

The semi-aromatic polyamide (A) used in the present invention can be produced using a conventionally known heat polymerization method or solution polymerization method. The heat polymerization method is preferably used in terms of being industrially advantageous. Examples of the heat polymerization method include a method consisting of the step (i) of obtaining a reaction product from an aromatic dicarboxylic acid component and a diamine component, and the step (ii) of polymerizing the obtained reaction product.

Examples of the step (i) include a method of previously heating a dicarboxylic acid powder to a temperature equal to or more than the melting point of a diamine and equal to or less than the melting point of the dicarboxylic acid, and adding the diamine to the dicarboxylic acid powder at this temperature with water not substantially contained so as to keep the powder state of the dicarboxylic acid. Examples of another method include a method of stirring and mixing a suspension consisting of a diamine in a molten state and a solid dicarboxylic acid to obtain a mixed liquid, and then performing a salt formation reaction by the reaction of the dicarboxylic acid and the diamine, and an oligomer formation reaction by the polymerization of the formed salt at a temperature less than the melting point of the finally formed semi-aromatic polyamide to obtain a mixture of the salt and the oligomer. In this case, crushing may be performed while the reactions are performed, or crushing may be performed after the reaction product is once taken out after the reactions. As the step (i), the former with easy control of the shape of the reaction product is preferred.

Examples of the step (ii) include a method of solid phase-polymerizing the reaction product obtained in the step (i) at a temperature less than the melting point of the finally formed semi-aromatic polyamide to perform polymerization to a predetermined molecular weight to obtain the semi-aromatic polyamide. The solid phase polymerization is preferably performed in a gas flow of an inert gas such as nitrogen with a polymerization temperature of 180 to 270°C and a reaction time of 0.5 to 10 hours.

The reaction apparatuses in the step (i) and the step (ii) are not particularly limited, and known apparatuses should be used. The step (i) and the step (ii) may be carried out by the same apparatus or different apparatuses.

In the production of the semi-aromatic polyamide (A), a polymerization catalyst may be used in order to increase the efficiency of polymerization. Examples of the polymerization catalyst include phosphoric acid, phosphorous acid, hypophosphorous acid, or salts thereof. The amount of the polymerization catalyst added is usually preferably 2.0 mol % or less based on all the monomers constituting the semi-aromatic polyamide (A).

The polyamide resin composition of the present invention needs to contain the fibrous reinforcing material (B) .

Examples of the fibrous reinforcing material (B) include glass fibers, carbon fibers, boron fibers, asbestos fibers, polyvinyl alcohol fibers, polyester fibers, acrylic fibers, aramid fibers, polybenzoxazole fibers, kenaf fibers, bamboo fibers, hemp fibers, bagasse fibers, high strength polyethylene fibers, alumina fibers, silicon carbide fibers, potassium titanate fibers, brass fibers, stainless steel fibers, steel fibers, ceramic fibers, and basalt fibers.

Especially, the fibrous reinforcing material (B) is preferably carbon fibers having a tensile strength of 4000 to 4800 MPa.

By containing carbon fibers having a tensile strength of 4000 MPa or more, the polyamide resin composition is likely to have an amount of creep strain of 2.0% or less in the flow direction after a lapse of 100 hours under the measurement conditions of a temperature of 100°C and a tensile load of 75 MPa.

On the other hand, the carbon fibers contained in the polyamide resin composition preferably have a tensile strength of not more than 4800 MPa for the following reasons. In the polyamide resin composition of the present invention, the melting point of the semi-aromatic polyamide (A) is 290 to 330°C, and therefore the actual processing temperature in melting and kneading reaches about 330 to 400°C. When the resin composition contains high strength carbon fibers having a tensile strength of more than 4800 MPa, excessive shear heat generation is caused during melting and kneading, and the temperature increases further, and the decomposition of the resin and the decomposition of the surface treatment agent on the fibers may occur, and poor dispersion of the fibers due to viscosity decrease may occur. Therefore, even if the resin composition contains high strength carbon fibers having a tensile strength of more than 4800 MPa, the effect of improving the amount of strain and other mechanical characteristics is not only not obtained but may decrease. In addition, even if decomposition and viscosity decrease during melting and kneading due to containing high strength carbon fibers having a tensile strength of more than 4800 MPa do not occur, the resin composition hardens under the influence of the strength of the carbon fibers and has decreased fluidity. It is also possible to perform melting and kneading by a small scale extruder or perform melting and kneading with the discharge and the number of revolutions set low, in order to suppress shear heat generation, but the productivity decreases significantly.

The carbon fibers having a tensile strength of 4000 to 4800 MPa preferably have a fiber length of 0.1 to 7 mm, more preferably 0.5 to 6 mm. When the carbon fibers have a fiber length of 0.1 to 7 mm, the mechanical characteristics of the resin composition can be improved without adversely affecting the moldability. The carbon fibers preferably have a fiber diameter of 3 to 20 µm, more preferably 5 to 13 µm. When the carbon fibers have a fiber diameter of 3 to 20 µm, the mechanical characteristics of the resin composition can be improved while breakage is decreased during melting and kneading. For the cross-sectional shape of the carbon fibers, the carbon fibers preferably have a circular cross section but may have a rectangular cross section, an elliptical cross section, or an irregularly shaped cross section other than a rectangular cross section and an elliptical cross section, as needed.

The content of the carbon fibers having a tensile strength of 4000 to 4800 MPa is preferably 1 to 60% by mass, and is more preferably 1 to 50% by mass because the mechanical strength improves. Especially, the content of the carbon fibers is further preferably 15 to 50% by mass because the specific gravity is low compared with conventional resin compositions, and the effect of improving mechanical strength increases. When the content of these carbon fibers is more than 60% by mass in the polyamide resin composition, the effect of improving mechanical characteristics is saturated, and not only can a more improving effect not be anticipated, but the fluidity decreases extremely, and therefore it may be difficult to obtain a molded article.

The polyamide resin composition of the present invention may further contain additives such as a stabilizer, a colorant, an antistatic agent, a flame retardant, a flame-retardant aid, and a carbonization inhibitor, as needed. Examples of the colorant include pigments such as titanium oxide, zinc oxide, and carbon black, and dyes such as nigrosine. Examples of the stabilizer include hindered phenolic antioxidants, phosphorus-based antioxidants, sulfur-based antioxidants, light stabilizers, heat stabilizers consisting of copper compounds, and heat stabilizers consisting of alcohols. Examples of the flame retardant include bromine-based flame retardants, phosphorus-based flame retardants consisting of metal phosphinates, and flame retardants consisting of phosphazene compounds. Examples of the flame-retardant aid include metal salts such as zinc stannate, zinc borate, antimony trioxide, antimony pentoxide, and sodium antimonate. The carbonization inhibitor is an additive for improving tracking resistance, and examples of the carbonization inhibitor include inorganic matter such as metal hydroxides and metal borates.

The polyamide resin composition of the present invention needs to have an amount of creep strain of 2.0% or less after a lapse of 100 hours under the measurement conditions of a temperature of 100°C and a tensile load of 75 MPa and preferably has an amount of creep strain of 1.5% or less, more preferably 1.0% or less. When the amount of strain of the polyamide resin composition is more than 2.0%, the obtained rotating body such as impeller or fan, or the like may have limited rotation speed. When the polyamide resin composition of the present invention contains the semi-aromatic polyamide (A) and the fibrous reinforcing material (B), the amount of strain can be 2.0% or less.

The polyamide resin composition of the present invention preferably has a bending strength of 180 MPa or more, more preferably 250 MPa or more, as measured in accordance with ISO 178 and preferably has a bending modulus of 5 GPa or more, more preferably 10 GPa or more, as measured in accordance with ISO 178. When the bending strength of the polyamide resin composition is 180 MPa or more, and the bending modulus is 5 GPa or more, the obtained rotating body such as impeller or fan, or the like has a small dimensional change and can be rotated at higher speed.

As the method for producing the polyamide resin composition of the present invention, a method of blending the semi-aromatic polyamide (A), the fibrous reinforcing material (B), and additives and the like added as needed, and melting and kneading the blend is preferred.

Examples of the melting and kneading method include methods using a batch type kneader such as Brabender, a Banbury mixer, a Henschel mixer, a helical rotor, a roll, a single-screw extruder, a twin-screw extruder, and the like.

Examples of the method for processing the polyamide resin composition into various shapes include a method of extruding a molten mixture in the form of strands and converting the strands into a pellet shape, a method of hot-cutting or underwater-cutting a molten mixture into a pellet shape, a method of extrusion in the form of a sheet and cutting, and a method of extrusion in the form of a block and grinding into a powdery shape.

The molded article of the present invention is obtained by molding the polyamide resin composition and can be applied to rotating bodies such as impellers and fans.

Usually, an impeller is housed in a housing, and when the impeller rotates, a flow occurs in the space between the outer surface of the impeller and the inner surface of the housing. As the rotation of the impeller becomes faster, and as the space becomes smaller, the occurring flow becomes faster.

Large stress (centrifugal force) is applied to an impeller rotating at high speed, in the centrifugal direction in proportion to mass, and further bending stress is applied in the direction opposite to the rotation by resistance to the fluid, and the impeller constantly deforms slightly during rotation. When high speed rotation is continued for a long period, the impeller deforms gradually in the centrifugal direction. The degree of this continuous deformation can be evaluated by the creep deformation of the material of the impeller. The degree of instantaneous deformation can be evaluated by the elastic modulus of the material of the impeller.

For higher performance, an impeller is designed so that rotation is fast by decreasing the gap formed by the dimensional difference between the impeller outer diameter and the housing inner diameter. Therefore, the material constituting the high performance impeller becomes more preferred as the specific gravity becomes smaller, as the elastic modulus becomes higher, and as the creep deformation becomes smaller. The polyamide resin composition of the present invention has high heat resistance and high creep strength and therefore can be preferably used as rotating bodies such as propellers, impellers, fans, axial flow fans, blades, and bladed wheels, and the sliding members of actuators, bearings, and the like. The polyamide resin composition of the present invention can be particularly preferably used in applications for such rotating bodies as to be small, have thin blades, and further be used in high speed rotation at 10,000 or more revolutions per minute.

Examples of the method for molding the polyamide resin composition to produce a molded article include an injection molding method, an extrusion method, a blow molding method, and a sinter molding method. Especially, the injection molding method is preferred because the effect of improving mechanical characteristics and moldability is large.

The injection molding machine is not particularly limited, and examples of the injection molding machine include a screw in-line type injection molding machine and a plunger type injection molding machine. The polyamide resin composition heated and melted in the cylinder of an injection molding machine is measured for each shot, injected into a mold in a molten state, cooled and solidified in a predetermined shape, and then taken out of the mold as a molded article. The resin temperature during the injection molding is preferably the melting point (Tm) of the semi-aromatic polyamide (A) or more, more preferably less than (Tm + 50°C).

The mold temperature during the molding is not particularly limited but is preferably 80 to 150°C. With the polyamide resin composition of the present invention, with the mold in this temperature range, a molded article having a high degree of crystallinity can be obtained, and in turn, a molded article excellent in high heat resistance and low water absorbency can be obtained.

For all conventional resins used for the materials of impellers capable of high speed rotation, the mold temperature during molding needs to be 200°C or more. The polyamide resin composition of the present invention can be molded with a low temperature mold compared with the conventional resins, and the reduction of energy cost during molding mass production is possible.

During the heating and melting of the resin composition, sufficiently dried resin composition pellets are preferably used. When the amount of the contained moisture is large, the resin composition foams in the cylinder of the injection molding machine, and it may be difficult to obtain an optimum molded article. The moisture percentage of the resin composition pellets used in injection molding is preferably less than 0.3% by mass, more preferably less than 0.1% by mass.

### Examples

The present invention will be specifically described below by Examples, but the present invention is not limited by these Examples.

### 1. Measurement Methods

The characteristics of polyamide resin compositions and molded articles were measured and evaluated by the following methods.

### (1) Melting Point

The temperature was increased to 360°C at a temperature increasing rate of 20°C/minute, then maintained at 360°C for 5 minutes, decreased to 25°C at a temperature decrease rate of 20°C/minute, further maintained at 25°C for 5 minutes, and then increased again at a temperature increasing rate of 20°C/minute for measurement, using a differential scanning calorimeter (model DSC-7 manufactured by PerkinElmer Inc.). The top of the endothermic peak at the time was taken as the melting point.

### (2) Density

Obtained pellets of a resin composition were sufficiently dried and then injection-molded under the conditions of a cylinder temperature of (melting point + 15°C) and a molding cycle of 35 seconds using an injection molding machine (model S2000i-100B manufactured by FANUC CORPORATION), to make a dumbbell test piece. In the case of Examples 1 to 12 and Comparative Examples 1 to 10 and 12, the mold temperature was 120°C, and in the case of Comparative Example 11, the mold temperature was 90°C.

Using the obtained dumbbell test piece, the density was measured in accordance with ISO 1183.

### (3) Mechanical Characteristics

Using a dumbbell test piece made by the same method as the method described in the (2), the bending strength and the bending modulus were measured in accordance with ISO 178.

Using the dumbbell test piece made, with reference to ISO 899-1, a tensile creep test under a temperature atmosphere of 100°C and at a tensile load of 75 MPa was carried out, and the amount of creep strain after a lapse of 100 hours was measured.

### (4) Appearance (Arithmetic Mean Height)

Obtained pellets of a resin composition were sufficiently dried, and then a 40 mm × 40 mm × 3.0 mmt test piece was made at a cylinder temperature of (melting point + 15°C), a mold surface roughness (arithmetic mean height (Sa)) of 1 µm, and a mold temperature of 180°C under the condition of a molding cycle of 30 seconds using an injection molding machine (J35-AD manufactured by The Japan Steel Works, Ltd.).

Similarly, a test piece was also made at a mold temperature of 120°C.

The arithmetic mean height (Sa) was measured within the range of 25 mm × 25 mm in the central portion of each test piece at 12x magnification using a 3D shape measuring machine (VR-3200 manufactured by KEYENCE CORPORATION).

In the present invention, an arithmetic mean height (Sa) of 5 µm or less was considered acceptable.

### (5) Fluidity

Obtained pellets of a resin composition were sufficiently dried, and then a 0.5 mm thick test piece for flow length measurement was made at a cylinder temperature of (melting point + 15°C) and a mold temperature of 120°C under the condition of a molding cycle of 30 seconds using an injection molding machine (J35-AD manufactured by The Japan Steel Works, Ltd.).

In the present invention, a flow length of 8 mm or more is considered acceptable, and the flow length is preferably 15 mm or more.

### (6) Productivity

From melting and kneading conditions (number of revolutions of screw (Ns) 250 rpm, amount of discharge (Q) 25 kg/h) in the production of resin composition pellets in the Examples, the amount of discharge (Q) was increased while keeping the amount of extrusion per revolution of the screw (Q/Ns) constant. The upper limit of the amount of discharge (Q) allowing production until the torque of the extruder increased or the fluctuations in torque increased to make melting and kneading difficult was obtained as the maximum amount of discharge. For the polyamide resin composition, as the maximum amount of discharge becomes higher, kneading becomes easier, and the productivity and the production efficiency become higher.

### (7) Continuous Durability Test

An impeller having a maximum outer diameter of 25 mm was made by the molding method described in the (2) except that a mold for molding the impeller in FIG. 1 was used instead of the mold for making a dumbbell test piece.

The obtained impeller was housed in a housing having a gap of 500 µm formed by the dimensional difference between the impeller outer diameter and the housing inner diameter, and subjected to a 200 hour continuous durability test at a number of revolutions of 100,000 rpm using a spin tester. The continuous durability of the impeller was evaluated by the time until the impeller broke due to the fatigue or creep life of the impeller, the cracking of the impeller or the chipping of the impeller due to the contact of the impeller with the housing due to the deformation of the vane portion, or the like.

### (8) Vane Portion Contact Test

Five impellers made by the same method as the (7) were rotated at a number of revolutions of 120,000 rpm for 1 minute using a spin tester with the gap formed by the dimensional difference between the impeller outer diameter and the spin tester inner diameter set at two values, 500 µm and 100 µm. The proportion of the number of impellers breaking due to the cracking of the impeller or the chipping of the impeller due to the contact of the vane portion, or the like was measured.

### 2. Raw Materials

The raw materials used in the Examples and the Comparative Examples are shown below.

### (1) Polyamides

### -Semi-Aromatic Polyamide (PA10T-1)

4.81 kg of powdery terephthalic acid (TPA) as a dicarboxylic acid component, 0.15 kg of stearic acid (STA) as a monocarboxylic acid component, and 9.3 g of sodium hypophosphite monohydrate as a polymerization catalyst were placed in a ribbon blender type reaction apparatus, and heated to 170°C in a nitrogen-sealed state while being stirred at a number of revolutions of 30 rpm. Subsequently, with the temperature kept at 170°C and the number of revolutions kept at 30 rpm, 5.04 kg of 1,10-decanediamine (DDA) heated to 100°C, as a diamine component, was continuously (continuous liquid injection mode) added over 2.5 hours using a liquid injection apparatus, to obtain a reaction product. The molar ratio of the raw material monomers was TPA:DDA:STA = 49.3:49.8:0.9 (the equivalent ratio of the functional groups of the raw material monomers was TPA:DDA:STA = 49.5:50.0:0.5).

Then, the obtained reaction product was polymerized by heating using the same reaction apparatus under a nitrogen gas flow at 250°C and a number of revolutions of 30 rpm for 8 hours to make a polyamide powder.

Subsequently, the obtained polyamide powder was converted into the form of strands using a twin-screw kneader, and the strands were passed through a water tank for cooling and solidification. The cooled and solidified strands were cut by a pelletizer to obtain semi-aromatic polyamide (PA10T-1) pellets.

### -Semi-Aromatic Polyamides (PA10T-2, PA10T/10I-1, 2, and 3, PA10T/6T-1 and 2, and PA9T-1, 2, 3, and 4)

Semi-aromatic polyamide pellets were obtained in the same manner as PA10T-1 except that the resin composition was changed as shown in Table 1.

The resin composition and characteristic values of the obtained semi-aromatic polyamides are shown in Table 1.

**[Table 1]**

| | Composition of semi-aromatic polyamide (A) | | | | | | Melting point |
|---|---|---|---|---|---|---|---|
| | Aromatic dicarboxylic acid component | | Diamine component | | Monocarboxylic acid component | | |
| | Type | Content | Type | Content | Type | Content | |
| | | mol % | | mol % | | mol % | °C |
| PA10T-1 | TPA | 49.3 | DDA | 49.8 | STA | 0.9 | 317 |
| PA10T-2 | TPA | 49.3 | DDA | 49.8 | BA | 0.9 | 317 |
| PA10T/10I -1 | TPA IPA | 44.4 4.9 | DDA | 49.8 | STA | 0.9 | 307 |
| PA10T/10I -2 | TPA IPA | 39.4 9.9 | DDA | 49.8 | STA | 0.9 | 293 |
| PA10T/10I -3 | TPA IPA | 29.6 19.7 | DDA | 49.8 | STA | 0.9 | 272 |
| PA10T/6T-1 | TPA | 49.3 | DDA | 39.8 | STA | 0.9 | 296 |
| | | | HDA | 10.0 | | | |
| PA10T/6T-2 | TPA | 49.3 | DDA | 29.9 | STA | 0.9 | 279 |
| | | | HDA | 19.9 | | | |
| PA9T-1 | TPA | 49.3 | NDA | 39.8 | STA | 0.9 | 300 |
| | | | 2M-ODA | 10.0 | | | |
| PA9T-2 | TPA | 49.3 | NDA | 39.8 | BA | 0.9 | 300 |
| | | | 2M-ODA | 10.0 | | | |
| PA9T-3 | TPA | 49.3 | NDA | 24.9 | STA | 0.9 | 262 |
| | | | 2M-ODA | 24.9 | | | |
| PA9T-4 | TPA | 49.3 | NDA | 24.9 | BA | 0.9 | 262 |
| | | | 2M-ODA | 24.9 | | | |

| | | | | | | | |
|---|---|---|---|---|---|---|---|
| TPA: terephthalic acid, IPA: isophthalic acid, DDA: 1,10-decanediamine, NDA: 1,9-nonanediamine, HDA: 1,6-hexanediamine, 2M-ODA: 2-methyl-1,8-octanediamine, STA: stearic acid, BA: benzoic acid | | | | | | | |

### -PA66: polyamide 66 (UNITIKA Nylon 66 A125J manufactured by UNITIKA LTD.), melting point 260°C

### (2) PEEK

polyetheretherketone (VESTAKEEP 2000G manufactured by Daicel-Evonik Ltd.), melting point 340°C

### (3) Fibrous Reinforcing Materials

- CF1: carbon fibers (T800SC-24K manufactured by Toray Industries Inc.) tensile strength 5880 MPa
- CF2: carbon fibers (TR06NEB4J manufactured by MITSUBISHI RAYON CO., LTD.) tensile strength 4900 MPa
- CF3: carbon fibers (TR06NLB5K manufactured by MITSUBISHI RAYON CO., LTD.) tensile strength 4120 MPa
- CF4: carbon fibers (HTA-C6-NR manufactured by Teijin Carbon Tenax) tensile strength 3920 MPa
- CF5: carbon fibers (223HE manufactured by MITSUBISHI RAYON CO., LTD.) tensile strength 3800 MPa
- GF: glass fibers (T-262H manufactured by Nippon Electric Glass Co., Ltd.) tensile strength 3200 MPa

### Example 1

90 Parts by mass of PA10T-1 weighed using a loss-in-weight type continuous constant quantity feed apparatus (model CE-W-1 manufactured by Kubota Corporation) was fed to the main feed port of a co-rotating twin-screw extruder having a screw diameter of 26 mm and an L/D of 50 (model TEM26SS manufactured by TOSHIBA MACHINE CO., LTD.), and melted and kneaded. On the way, 10 parts by mass of CF3 was fed from a side feeder, and the mixture was further melted and kneaded. The melted and kneaded material was taken from a die in the form of strands, and then the strands were passed through a water tank for cooling and solidification. The cooled and solidified strands were cut by a pelletizer to obtain pellets of a resin composition. The barrel temperature of the extruder was set at (melting point of PA10T-1 -5 to +15°C), the number of revolutions of the screw was 250 rpm, and the amount of discharge was 25 kg/h.

### Examples 2 to 12 and Comparative Examples 1 to 12

The same operations as Example 1 were performed except as shown in Table 2, to obtain pellets of resin compositions.

The resin composition and evaluation of the obtained resin compositions are shown in Table 2.

**[Table 2]**

| | | Composition of polyamide resin composition | | | | Characteristics of polyamide resin composition | | | | | | | | Characteristics of impeller | | |
|---|---|---|---|---|---|---|---|---|---|---|---|---|---|---|---|---|
| | | Semi-aromatic polyamide (A) | | Fibrous rei nforcing material (B) | | Density | Mechanical characteristics | | | Appearance | | Flow length | Productivity | Continuous durability test | Contact test (Proportion of breakage) | |
| | | | | | | | Amount of creep strain | Bending strength | Bending modulus | Arithmetic mean height (Sa)(µm) | | | Maximum amount of discharge | | | |
| | | | | | | | | | | Mold temperature 120°C | Mold temperature 180°C | | | | Gap 500 *µ*m | Gap 100 *µ*m |
| | | Type | Parts by mass | Type | Parts by mass | g/cm 3 | % | MPa | GPa | | | mm | kg/h | h | | |
| Example | 1 | PA10T-1 | 90 | CF3 | 10 | 1.18 | 1.2 | 200 | 8 | 5 | 4 | 28 | 45 | 150 | 1/5 | 3/5 |
| | 2 | PA10T-1 | 80 | CF3 | 20 | 1.23 | 1.0 | 280 | 13 | 5 | 4 | 25 | 45 | 150 | 1/5 | 3/5 |
| | 3 | PA10T-1 | 70 | CF3 | 30 | 1.28 | 0.8 | 334 | 20 | 5 | 4 | 20 | 40 | >200 | 0/5 | 0/5 |
| | 4 | PA10T-1 | 60 | CF3 | 40 | 1.33 | 0.7 | 345 | 25 | 5 | 4 | 15 | 35 | >200 | 0/5 | 0/5 |
| | 5 | PA10T-2 | 70 | CF3 | 30 | 1.28 | 0.8 | 334 | 20 | 5 | 4 | 18 | 40 | >200 | 0/5 | 0/5 |
| | 6 | PA10T/10I-1 | 70 | CF3 | 30 | 1.28 | 1.0 | 331 | 20 | 4 | 3 | 22 | 40 | 150 | 1/5 | 3/5 |
| | 7 | PA10T/10I-2 | 70 | CF3 | 30 | 1.28 | 1.3 | 320 | 19 | 5 | 4 | 20 | 40 | 120 | 1/5 | 3/5 |
| | 8 | PA10T/6T-1 | 70 | CF3 | 30 | 1.28 | 1.2 | 310 | 18 | 5 | 4 | 20 | 40 | 130 | 1/5 | 3/5 |
| | 9 | PA9T-1 | 70 | CF3 | 30 | 1.28 | 1.3 | 320 | 20 | 5 | 4 | 23 | 40 | 100 | 1/5 | 3/5 |
| | 10 | PA9T-2 | 70 | CF3 | 30 | 1.28 | 1.3 | 320 | 20 | 5 | 4 | 20 | 40 | 100 | 1/5 | 3/5 |
| | 11 | PA10T-1 | 70 | CF1 | 30 | 1.28 | 0.7 | 360 | 23 | 5 | 4 | 9 | 30 | >200 | 0/5 | 0/5 |
| | 12 | PA10T-1 | 70 | CF2 | 30 | 1.28 | 0.7 | 360 | 23 | 5 | 4 | 12 | 25 | >200 | 0/5 | 0/5 |
| Comparative Example | 1 | PA10T-1 | 100 | - | - | 1.14 | 6.0 | 115 | 2.5 | 2 | 2 | 30 | 45 | 10 | 3/5 | 5/5 |
| | 2 | PA10T-1 | 70 | CF4 | 30 | 1.28 | 2.5 | 320 | 19.0 | 5 | 4 | 23 | 40 | 50 | 3/5 | 5/5 |
| | 3 | PA10T-1 | 70 | CF5 | 30 | 1.28 | 3.0 | 300 | 18.5 | 5 | 4 | 25 | 40 | 30 | 3/5 | 5/5 |
| | 4 | PA10T-1 | 70 | GF | 30 | 1.37 | 3.8 | 260 | 9 | 5 | 4 | 30 | 45 | 20 | 3/5 | 5/5 |
| | 5 | PA10T-1 | 50 | GF | 50 | 1.58 | 2.5 | 340 | 15 | 6 | 4 | 19 | 40 | 50 | 3/5 | 5/5 |
| | 6 | PA10T-1 | 30 | GF | 70 | - | - | - | - | - | - | - | - | - | - | - |
| | 7 | PA10T/10I-3 | 70 | CF3 | 30 | 1.28 | 2.7 | 310 | 18 | 5 | 4 | 23 | 40 | 30 | 3/5 | 5/5 |
| | 8 | PA10T/6T-2 | 70 | CF3 | 30 | 1.28 | 2.5 | 320 | 19 | 5 | 4 | 23 | 40 | 50 | 3/5 | 5/5 |
| | 9 | PA9T-3 | 70 | CF3 | 30 | 1.28 | 3.0 | 310 | 20 | 5 | 4 | 28 | 40 | 50 | 3/5 | 5/5 |
| | 10 | PA9T-4 | 70 | CF3 | 30 | 1.28 | 3.0 | 310 | 20 | 5 | 4 | 25 | 40 | 50 | 3/5 | 5/5 |
| | 11 | PA66 | 70 | CF3 | 30 | 1.27 | 3.0 | 355 | 19 | 5 | 4 | 25 | 45 | 30 | 3/5 | 5/5 |
| | 12 | PEEK | 70 | CF3 | 30 | 1.40 | 0.3 | 350 | 23 | 15 | 7 | 6 | 35 | >200 | 0/5 | 0/5 |

In the polyamide resin compositions of Examples 1 to 12, the constituents were within the ranges defined in the present invention, and therefore the amount of creep strain was 2.0% or less, and the molded articles obtained by molding at mold temperatures of 120°C and 180°C had small surface roughness (arithmetic mean height (Sa)) and were excellent in appearance.

In the polyamide resin compositions of Examples 11 and 12, the tensile strength of the carbon fibers was high, and therefore the fluidity was somewhat poor. In the polyamide resin compositions of Examples 1 and 2, the content of the fibrous reinforcing material was low, and in the polyamide resin compositions of Examples 6 to 10, the melting point of the semi-aromatic polyamide resin was low, and the heat resistance was low, and therefore all had a somewhat large amount of creep strain.

The resin compositions of Examples 3 and 9 contained a semi-aromatic polyamide (A) in which the monocarboxylic acid component is stearic acid, and therefore each had long flow length compared with the resin compositions of Examples 5 and 10 containing a semi-aromatic polyamide (A) in which the monocarboxylic acid component is benzoic acid.

The resin composition of Comparative Example 1 contained no fibrous reinforcing material, the resin compositions of Comparative Examples 2 and 3 used carbon fibers having a tensile strength of less than 4000 MPa, and the resin compositions of Comparative Examples 4 and 5 used glass fibers without using carbon fibers, and therefore all had a large amount of creep strain.

In Comparative Example 6, the content of the fibrous reinforcing material was too high, and therefore melting and kneading could not be performed, and a resin composition could not be obtained.

The resin compositions of Comparative Examples 7 to 11 used a polyamide resin having a low melting point and therefore had a large amount of creep strain. The resin composition of Comparative Example 12 used polyetheretherketone and therefore had high density, and the molded article obtained by molding with the low temperature mold had large surface roughness (Sa) and was poor in appearance.

The impellers obtained by molding the resin compositions obtained in the Comparative Examples broke before 50 hours in the continuous durability test, but the impellers obtained by molding the resin compositions of the Examples had a life of 100 hours or more. When load application is discontinuous, the influence of heat generation decreases, and a strain recovery effect can be expected, and therefore it can be said that when an impeller has a life of 100 hours or more in the continuous durability test, the impeller has sufficient durability. For the impellers of Examples 3 to 5, 11, and 12, the gap between the impeller and the housing can be changed from 500 µm to 100 µm, and compressors using these impellers can have improved compression efficiency.

## Claims

1. A polyamide resin composition comprising a semi-aromatic polyamide (A) having a melting point of 290 to 330°C and a fibrous reinforcing material (B), wherein the polyamide resin composition has an amount of creep strain of 2.0% or less after a lapse of 100 hours under measurement conditions of a temperature of 100°C and a tensile load of 75 MPa.

2. The polyamide resin composition according to claim 1, wherein the semi-aromatic polyamide (A) comprises a dicarboxylic acid component and a diamine component as constituents, the dicarboxylic acid component includes terephthalic acid as a main component, and the diamine component includes 1,10-decanediamine as a main component.

3. The polyamide resin composition according to claim 1 or 2, wherein the fibrous reinforcing material (B) is a carbon fiber having a tensile strength of 4000 to 4800 MPa.

4. A molded article obtained by molding the polyamide resin composition according to any of claims 1 to 3.

5. The molded article according to claim 4, being a rotating body.

6. The molded article according to claim 5, wherein the rotating body is an impeller.

7. The molded article according to claim 5, wherein the rotating body is a fan.
